# EUROPÄISCHE PATENTSCHRIFT

(11) **EP 1 948 490 B1**
(45) Veröffentlichungstag und Bekanntmachung des Hinweises auf die Patenterteilung: **02.06.2010**
(21) Anmeldenummer: 06807284.2
(22) Anmeldetag: 16.10.2006
(51) Int. Cl.: B60S 1/40

(54) **GELENKARM AUS KUNSTSTOFF**
PLASTIC ARTICULATED ARM
BRAS ARTICULE EN MATIERE SYNTHETIQUE

(30) Priorität: 09.11.2005 DE 102005053395
(43) Veröffentlichungstag der Anmeldung: 30.07.2008
(73) Patentinhaber: ROBERT BOSCH GMBH, 70442 Stuttgart (DE)
(72) Erfinder: MAYER, Stephan, 77855 Achern (DE); RITT, Jean-Marc, F-67000 Strasbourg (FR)
(86) Internationale Anmeldenummer: PCT/EP2006/067425
(87) Internationale Veröffentlichungsnummer: WO 2007/054420

(56) Entgegenhaltungen:
- WO-A-03/084790
- WO-A-2005/000647
- FR-A1- 2 780 013

## Beschreibung

### Stand der Technik

Die Erfindung geht von einem Gelenkarm aus Kunststoff nach dem Oberbegriff des Anspruchs 1 aus.

Bekannte Scheibenwischer weisen einen Gelenkarm auf, der mit einem Ende auf einer von einem Wischermotor angetriebenen Wischerwelle sitzt. An seinem freien, äußeren Ende ist ein Wischblatt angelenkt. Dieses besitzt ein in der Regel mehrgliederiges Tragbügelsystem mit einem Mittelbügel. An diesem sind gegebenenfalls untergeordnete Bügel angelenkt, von denen zumindest einige mit Krallen an ihren Enden eine Wischleiste sowie meist zwei in seitliche Nuten eingelegte Federschienen halten. Es sind auch Flachbalkenwischblätter bekannt, die anstelle des Tragbügelsystems ein balkenförmiges, federelastisches Tragelement besitzen. Dieses ist über ein Anschlusselement gelenkig mit einem Verbindungsteil eines Gelenkarms verbunden.

Der Gelenkarm der zu betrachtenden Art besteht aus Kunststoff und weist ein u-förmiges, zu einer Fahrzeugscheibe hin offenes Querschnittprofil mit Versteifungsrippen auf. Zudem ist am äußeren Ende ein Verbindungsteil zum Anlenken des Wischblatts angeformt.

Das Verbindungsteil wird von oben in einen Einhängekasten des Wischblatts eingesetzt, wobei eine offene Nabe des Verbindungsteils einen zwischen den Seitenwänden des Einhängekastens angeordneten Gelenkbolzen umfasst, während die äußeren Seitenwände des Verbindungsteils an den inneren Seitenwänden des Einhängekastens anliegen. Somit bildet der in der Nabe gelagerte Gelenkbolzen ein Gelenk, das eine Schwenkbewegung zwischen dem Gelenkarm und dem Wischblatt ermöglicht, während die Seitenwände des Verbindungsteils das Wischblatt seitlich führen.

Zweckmäßigerweise wird der Gelenkarm in seiner endgültigen Form in einem Spritzgussverfahren hergestellt, sodass keine Nachbearbeitung notwendig ist. Allerdings weisen diese Bauteile fertigungsbedingte Toleranzen auf. Daher muss zwischen den starren Seitenwänden des Verbindungsteils und den Seitenwänden des Einhängekastens ein Spiel vorgesehen werden. Dieses vergrößert sich während der Betriebsdauer durch Verschleiß. Ein seitliches Spiel zwischen dem Gelenkarm und dem Wischblatt erzeugt eine ratternde Bewegung und wirkt sich negativ auf das Wischergebnis aus. Ferner werden durch das Spiel nicht gewünschte Geräusche verursacht. Diese werden ungedämpft über die starre Führung auf den Gelenkarm übertragen.

Solche Gelenkarme sind beispielsweise aus der JP 2001315622 und der JP 2000272478 bekannt.

### Vorteile der Erfindung

Nach der Erfindung ist mindestens in einer Seitenwand des Verbindungsteils in Längsrichtung des Gelenkarms ein Fenster vorgesehen, an dessen Begrenzung eine nach außen über die Seitenwand vorstehende Federzunge angeordnet ist. Durch die in Betriebsstellung vorgespannte Federzunge wird das Wischblatt während der gesamten Lebensdauer spielfrei geführt, wobei der Verschleiß kompensiert wird. Über die Dimensionierung der Federzunge bzw. der Federzungen sind die Dämpfungsfunktion und die Führungsfunktion beeinflussbar. Somit ist der Scheibenwischer geräuschoptimiert, da das Wischblatt gegenüber dem Wischarm spielfrei und gedämpft geführt ist. Außerdem sind die Federzungen in dem vorgegebenen Bauraum im Gelenkarm integriert und liegen im Einhängekasten des Wischblatts geschützt gegen Beschädigungen.

Die offene Nabe ist zweckmäßigerweise zwischen dem Fenster und einer Stirnseite am Ende des Gelenkarms angeordnet, sodass das Wischblatt insbesondere zu seinem inneren Bewegungskreis hin gut geführt ist, der bei kleinen Wischgeschwindigkeiten gegenüber Schwingungen kritisch ist. Ferner kann die Federzunge über einen Federbalken an einer quer zur Längsrichtung des Gelenkarms verlaufenden Begrenzung des Fensters an der Seitenwand des Verbindungsteils angeformt sein. Durch die Länge, die in dieser Lage ausreichend dimensioniert werden kann, und durch die Stärke des Federbalkens können die Federeigenschaften der Federzunge bestimmt werden. Hierbei ist es zweckmäßig, dass der Federbalken in einer Längsführung gegenüber der Begrenzung des Fensters verschiebbar ist, sodass sich verschiedene wirksame Federlängen des Federbalkens einstellen lassen.

Bei Schnee, Eis und Schmutz müssen häufig große Antriebskräfte auf das Wischblatt übertragen werden. Dass dabei die Federzunge mit ihrem Federbalken nicht überbeansprucht wird, sind in Längsrichtung zu beiden Seiten des Fensters feste Führungsflächen an der Seitenwand des Verbindungsteils vorgesehen, die über Querstege mit festen Führungsflächen an der anderen Seitenwand verbunden sind. Somit ist auch bei schwierigen Betriebsbedingungen eine sichere Führung des Wischblatts gewährleistet. Ferner ist an der Innenseite der Federzunge in geringem Abstand zu dieser ein Anschlag angeordnet, um den Federweg der Federzunge nach innen zu begrenzen und somit gegen Beschädigungen zu schützen. Der Anschlag ist vorteilhafterweise an einem Mittelsteg des Verbindungsteils angeordnet.

Gemäß einer weiteren Ausgestaltung der Erfindung weist die Federzunge an ihrem freien Ende eine seitliche Anlagefläche auf, die nach außen gegenüber der übrigen seitlichen Kontur der Federzunge vorsteht. Dadurch erreicht man eine definierte Anlage gegenüber dem Einhängekasten, sodass sich definierte Federwege und Federkräfte der Federzunge ergeben.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Endes eines Gelenkarms schräg von unten,
- Fig. 2: eine perspektivische Ansicht eines Einhängekastens schräg von oben und
- Fig. 3: eine Ansicht eines Verbindungsteils eines Gelenkarms mit einem Adapter von unten.

### Beschreibung der Ausführungsbeispiele

Ein Gelenkarm 10 aus Kunststoff besitzt an seinem freien Ende ein Verbindungsteil 12, das in einem Spritzgussverfahren an dem Gelenkarm angeformt ist. In Seitenwänden 14 des Verbindungsteils 12 ist eine offene Nabe 16 vorgesehen, die im montierten Zustand einen Gelenkstift 44 eines Wischblatts umfasst. Die Öffnung zur Montage des Gelenkstifts 44 ist mit 18 bezeichnet. Seitlich der Öffnung 18 sind in den Seitenwänden 14 Schlitze 20 angeordnet, sodass die Wandteile zwischen den Schlitzen 20 und der Öffnung 18 während der Montage federnd nachgeben können. Zum freien Ende hin sind die Seitenwände 14 durch eine gebogene Stirnwand 22 miteinander verbunden.

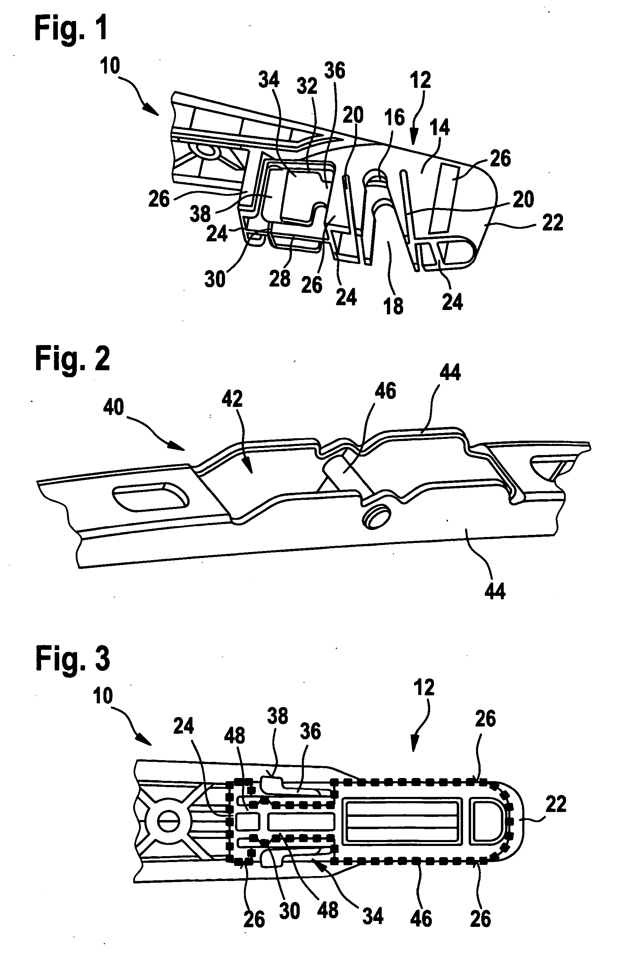

Auf der der Stirnwand 22 abgewandten Seite der Nabe 16 sind in den Seitenwänden 14 Fenster 32 angeordnet, die zur unteren Seite hin, die im Betrieb zu'einer nicht dargestellten Fahrzeugscheibe weist, offen sind. Zu beiden Seiten des Fensters 32 sind an den Seitenwänden 14 feste Führungsflächen 26 vorgesehen, die im montierten Zustand ein geringes Spiel zu Seitenwänden 14 eines Einhängekastens 42 eines Wischblatts aufweisen. Fig. 2 zeigt beispielhaft einen Einhängekasten 42 an einem Mittelbügel 40 eines Wischblatts.

Im Bereich der Fenster 32 sind Federzungen 34 angeordnet, die über Federbalken 36 mit dem Verbindungsteil 12 verbunden ist. Die Verbindung kann fest sein, indem der Federbalken 36 an der Begrenzung des Fensters 32 an dem Verbindungsteil 12 angeformt ist, sie kann aber auch lösbar sein, indem der Federbalken 36 in einer Längsführung verschiebbar am Verbindungsteil 12 gehalten ist. Durch die Längsverschiebung ändert sich die wirksame Federlänge des Federbalkens 36, sodass die Federeigenschaften der Federzunge 34 eingestellt werden können. An dem dem Federbalken 36 abgewandten Ende der Federzunge 34 befindet sich eine Anlagefläche 38, die aus dem Fenster 32 nach außen und gegenüber der übrigen Kontur der Federzunge 34 vorsteht. Somit ergibt sich eine definierte Federlänge zwischen der Abstützung des Federbalkens 36 an dem Verbindungsteil 12 und der Anlagefläche 38. Um die Federzungen 34 gegenüber Beschädigungen zu schützen, sind ihre Federwege nach innen durch Anschläge 30 begrenzt, die an einem Mittelsteg 28 des Verbindungsteils 12 bzw. eines darin eingesetzten Adapters 46 vorgesehen sind.

In Fig. 3 ist eine Ausführung dargestellt, bei der der Adapter 46 in das Verbindungsteil 12 eingesetzt ist. Hierbei ist die Federzunge 34 über den Federbalken 36 mit dem Adapter 46 verbunden, wobei im montierten Zustand die Anlageflächen 38 durch die Fenster 32 hervorragen. Die Federzungen 34 können sich an Anschlägen 30 nach innen abstützen, die an einem doppelten Mittelsteg 48 des Adapters 46 angeordnet sind.

## Patentansprüche

1. Gelenkarm (10) aus Kunststoff mit einem an seinem äußeren Ende durch die Seitenwände (14) gebildetes Verbindungsteil (12) für ein Wischblatt, wobei das Verbindungsteil (12) in einen Einhängekasten (42) des Wischblatts eingreifen kann und in den Seitenwänden (14), die zur seitlichen Führung des Wischblatts dienen, eine offene Nabe (16) für einen Gelenkstift (44) des Wischblatts aufweist, **dadurch gekennzeichnet, dass** mindestens in einer Seitenwand (14) des Verbindungsteils (12) in Längsrichtung des Gelenkarms (10) ein Fenster (32) vorgesehen ist, in dem eine nach außen über die Seitenwand (14) vorstehende Federzunge (34) angeordnet ist.

2. Gelenkarm (10) nach Anspruch 1, **dadurch gekennzeichnet, dass** die offene Nabe (16) zwischen dem Fenster (32) und einer Stirnseite (22) am Ende des Gelenkarms (10) angeordnet ist und das Fenster (32) an seiner unteren Begrenzung offen ist, wobei die Federzunge (34) über einen Federbalken (36) an einer quer zu Längsrichtung des Gelenkarms (10) verlaufenden Begrenzung des Fensters (32) befestigt ist.

3. Gelenkarm (10) nach Anspruch 2, **dadurch gekennzeichnet, dass** der Federbalken (36) in einer Längsführung gegenüber der Begrenzung des Fensters (32) verschiebbar ist.

4. Gelenkarm (10) nach einem der vorhergehenden Ansprüche, **dadurch gekennzeichnet, dass** in Längsrichtung zu beiden Seiten des Fensters (32) feste Führungsflächen (26) an der Seitenwand (14) vorgesehen sind, die über Querstege (24) mit festen Führungsflächen (26) an der anderen Seitenwand (14) verbunden sind.

5. Gelenkarm (10) nach einem der vorhergehenden Ansprüche, **dadurch gekennzeichnet, dass** an der Innenseite der Federzunge (34) in geringem Abstand zu dieser ein Anschlag (30) angeordnet ist, um den Federweg der Federzunge (34) zu begrenzen.

6. Gelenkarm (10) nach einem der vorhergehenden Ansprüche, **dadurch gekennzeichnet, dass** die Federzunge (34) an ihrem freien Ende eine seitliche Anlagefläche (38) aufweist, die nach außen gegenüber der übrigen seitlichen Kontur der Federzunge (34) vorsteht.

## Claims

1. Plastic articulated arm (10) with a connecting part (12) which is formed at the outer end of said arm by the side walls (14) and is intended for a wiper blade, wherein the connecting part (12) can engage in a mounting box (42) of the wiper blade and has an open hub (16) for an articulation pin (44) of the wiper blade in the side walls (14) which serve to laterally guide the wiper blade, **characterized in that** a window (32) is provided at least in one side wall (14) of the connecting part (12) in the longitudinal direction of the articulated arm (10), and a spring tongue (34) which protrudes outwards over the side wall (14) is arranged in said window.

2. Articulated arm (10) according to Claim 1,
**characterized in that** the open hub (16) is arranged between the window (32) and an end side (22) at the end of the articulated arm (10), and the window (32) is open at the lower delimitation thereof, the spring tongue (34) being fastened via a spring bar (36) to a delimitation of the window (32), said delimitation running transversely with respect to the longitudinal direction of the articulated arm (10).

3. Articulated arm (10) according to Claim 2,
**characterized in that** the spring bar (36) is displaceable in a longitudinal guide in relation to the delimitation of the window (32).

4. Articulated arm (10) according to one of the preceding claims, **characterized in that** guide surfaces (26) which are fixed in the longitudinal direction on both sides of the window (32) are provided on the side wall (14), said guide surfaces being connected via transverse webs (24) to fixed guide surfaces (26) on the other side wall (14).

5. Articulated arm (10) according to one of the preceding claims, **characterized in that** a stop (30) is arranged on the inner side of the spring tongue (34) at a small distance therefrom in order to limit the spring deflection of the spring tongue (34).

6. Articulated arm (10) according to one of the preceding claims, **characterized in that** the free end of the spring tongue (34) has a lateral contact surface (38) which protrudes outwards in relation to the rest of the lateral contour of the spring tongue (34).

## Revendications

1. Bras articulé (10) en matière plastique, comprenant une partie de connexion (12) pour un balai d'essuie-glace formée à son extrémité extérieure par les parois latérales (14), la partie de connexion (12) pouvant venir en prise dans un caisson d'accrochage (42) du balai d'essuie-glace, et présentant, dans les parois latérales (14) qui servent au guidage latéral du balai d'essuie-glace, un moyeu ouvert (16) pour une goupille d'articulation (44) du balai d'essuie-glace, **caractérisé en ce qu'**au moins dans une paroi latérale (14) de la partie de connexion (12), dans la direction longitudinale du bras articulé (10), est prévue une fenêtre (32) dans laquelle est disposée une langue élastique (34) saillant vers l'extérieur au-delà de la paroi latérale (14).

2. Bras articulé (10) selon la revendication 1,
**caractérisé en ce que** le moyeu ouvert (16) est disposé entre la fenêtre (32) et un côté frontal (22) à l'extrémité du bras articulé (10) et la fenêtre (32) est ouverte au niveau de sa limite inférieure, la langue élastique (34) étant fixée par le biais d'une barrette élastique (36) à une limite de la fenêtre (32) s'étendant transversalement à la direction longitudinale du bras articulé (10).

3. Bras articulé (10) selon la revendication 2,
**caractérisé en ce que** la barrette élastique (36) peut être déplacée dans un guide longitudinal par rapport à la limite de la fenêtre (32).

4. Bras articulé (10) selon l'une quelconque des revendications précédentes, **caractérisé en ce que** dans la direction longitudinale, des deux côtés de la fenêtre (32), des surfaces de guidage fixes (26) sont prévues sur la paroi latérale (14), lesquelles sont connectées par le biais de nervures transversales (24) à des surfaces de guidage fixes (26) sur l'autre paroi latérale (14).

5. Bras articulé (10) selon l'une quelconque des revendications précédentes, **caractérisé en ce que** sur le côté interne de la langue élastique (34), à faible distance de celle-ci, est prévue une butée (30) pour limiter la course de ressort de la langue élastique (34).

6. Bras articulé (10) selon l'une quelconque des revendications précédentes, **caractérisé en ce que** la langue élastique (34) présente, à son extrémité libre, une surface d'appui latérale (38), qui dépasse vers l'extérieur par rapport au reste du contour latéral de la langue élastique (34).
